# EUROPEAN PATENT SPECIFICATION

(11) **EP 2 060 127 B1**
(45) Date of publication and mention of the grant of the patent: **30.05.2012**
(21) Application number: 07804065.6
(22) Date of filing: 28.08.2007
(51) Int. Cl.: H04M 3/42, H04W 4/14

(54) **CALL INITIATION IN A TELECOMMUNICATIONS NETWORK**
VERBINDUNGSEINLEITUNG IN EINEM TELEKOMMUNIKATIONSNETZ
LANCEMENT D'APPEL DANS UN RÉSEAU DE TÉLÉCOMMUNICATION

(30) Priority: 29.08.2006 GB 0616996; 23.05.2007 GB 0709890
(43) Date of publication of application: 20.05.2009
(73) Proprietor: Vodafone Group PLC, Newbury Berkshire RG14 2FN (GB)
(72) Inventor: HARRABIN, Tim, Newbury Berkshire RG14 2FN (GB); LEE, Tin, Lin, Newbury Berkshire RG14 2FN (GB)
(74) Representative: Sneary, Adrian Bernard
(86) International application number: PCT/GB2007/003255
(87) International publication number: WO 2008/025974

(56) References cited:
- EP-A- 0 801 512
- WO-A-00/24225
- JP-A- 2 032 661
- KR-A- 20040 087 550

## Description

### Field of the Invention

The present invention relates to a method of selectively requesting that the user of a second device initiates a call to the user of a first device. The present invention also relates to a device suitable for use in this method.

### Background to the Invention

In some emerging markets or where there is a high proportion of pre-paid subscribers to a telecommunications network (i.e. subscribers who purchase calls in advance), subscribers often use mobile devices as pagers. This involves initiating a call to a callee, allowing the callee's phone to ring a couple of times, disconnecting, and then waiting for the callee to call back using a possibly cheaper tariff. The callee is able to call back the caller because the caller's phone number will have been supplied by Caller ID. Such "paging calls" cause numerous problems for both the network operator and for the subscribers. For example, although paging calls do not provide any revenue for the network operator, currently telecommunications networks are configured to automatically carry out the signalling required to set up the call and to establish a dedicated traffic channel to carry the speech, in anticipation that the call will be completed in a normal manner, rather than terminated prematurely. The networks are configured in this way because, when they were designed, "paging call" behaviour on a large scale was never envisaged. It is estimated that in some cases, paging calls consume over 50 percent of the network capacity during peak hours. Additionally, in many emerging markets, the phones used by many subscribers are of older design and have processors that are slow, and therefore such phones may not in fact ring in the short period before the caller disconnects, and therefore the callee will not be aware that the caller wishes to contact them.

Alternatively, the callee may answer the call promptly, or an automatic answering service may be activated, thus incurring unwanted costs for the caller.

EP-A-0 801 512 discloses mobile device having a menu-controlled user interface by means of which a short message to be sent is created strictly according to a predetermined structure. The user interface presents questions to which the user gives answers by selecting an option or by entering a string of characters on the keypad. The short message to be sent may contains the user's answers as such or the communication devices may formulate the message on the basis of those answers such that it is more easily read by a human recipient and/or machine.

### Brief Summary of the Invention

It is an objective of the embodiments of the present invention to be described to provide means for reducing the network resources that are consumed by paging calls and to provide a more satisfactory way for a caller to request that a callee contacts them. This will increase network efficiency.

According to a first aspect of the present invention, there is provided a method of selectively requesting that the user of a second device initiates a call to the user of a first device, the method characterised by, in response to a request from the user of the first device to call the second device, simulating to the user of the first device until a predetermined time that the user of the second device is being contacted, and sending, in response to the request from, the user of the first device to call the second device, an automatically generated message from the first device to the second device to alert the user of the second device to initiate a call to the first device only if the user of the device terminates the call request within the predetermined time

According to a second aspect of the present invention, there is provided a telecommunication control means operable to selectively request that the user of a second device initiates a call to the user of a first device characterised in that the control means is operable, in response to a request from the user of the first device to call the second device, to simulate to the user of the first device until a predetermined time that the user of the second device is being contacted, and is operable to send, in response to the request from the user of the first device to call the second device, an automatically generated message from the first device to the second device to alert the user of the second device to initiate a call to the first device only if the user of the first device terminates the can request within the predetermined time.

### Briet Description of the Drawings

A method for, and telecommunications control means operable to selectively request that the user of a second device initiates a call to the user of a first device will now be described by way of example, with reference to the accompanying drawings, in which:
Figure 1 shows schematically a network in which the invention may be used.
Figure 2 shows schematically the steps which are conventionally undertaken to set up a call.
Figure 3 shows schematically the steps which are taken to set up a call in accordance with an embodiment of the invention.

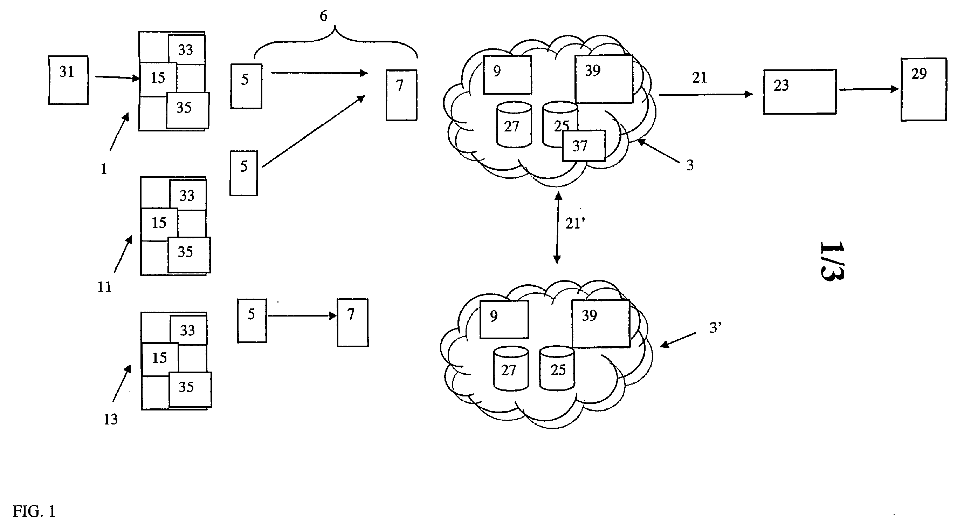

Figure 1 shows a mobile or cellular network - such as a GSM, GPRS or UMTS network. However, it should be appreciated that the invention is applicable to any type of network, although it is particularly applicable to a network where at least some of the devices communicate using mobile telecommunications. Mobile terminal 1 is registered with GSM/GPRS or UMTS (3G) mobile telecommunications network 3. The mobile terminal 1 may be a handheld mobile telephone, a personal digital assistant (PDA) or a laptop computer equipped with a datacard. The mobile terminal 1 communicates wirelessly with mobile telecommunications network 3 via the radio access network (RAN) of the mobile telecommunications network 3, comprising, in the case of a GSM network, base transceiver station (BTS) 5 and base station controller (BSC) 7. The BSC 7 manages the radio resources for one or more BTS 5. The BSC 7 and the BTS 5 collectively make up the base station subsystem (BSS) 6. Communications between the mobile terminal 1 and the mobile telecommunications network 3 are routed from the radio access network via mobile switching centre (MSC) 9, which may be connected by a fixed (cable) link to the mobile telecommunications network 3.

In the conventional manner, a multiplicity of other mobile terminals are registered with the mobile telecommunications network 3. These mobile terminals include mobile terminals 11 and 13. The terminals 11 and 13 communicate with the mobile telecommunications network 3 in a similar manner to the terminal 1, that is via an appropriate BSS 6 and MSC 9.

The MSC 9 of the mobile telecommunications network 3 includes a gateway which enables communications with other networks 3' or with the public switched telephone network (PSTN) 23 via an appropriate link 21 or 21'.

Each of the mobile terminals 1, 11 and 13 are provided with a respective subscriber identity module (SIM) 15. The SIM 15 is pre-programmed with a unique identification number, the "International Mobile Subscriber Identity" (IMSI) which is not visible on the card and is not known to the subscriber. The subscriber is issued with a publicly known number, that is, the subscriber's telephone number, by means of which calls to the subscriber are initiated by callers. This number is the MSISDN. During the manufacturing process of each SIM, authentication information is also stored thereon under the control of the mobile telecommunications network 3. The mobile telecommunications network 3 itself stores details of each of the SIMs issued under its control. In operation of the mobile telecommunications network 3, a terminal 1, 11, 13 is authenticated (for example, when the user 31 activates the terminal in the network with a view to making or receiving calls) by the network sending a challenge to the terminal 1, 11, 13 incorporating a SIM 15, in response to which the SIM 15 calculates a reply (dependent on the predetermined information held on the SIM - typically an authentication algorithm and a unique key Ki) and transmits it back to the mobile telecommunications network 3. An authentication centre 39 checks that the reply received matches the expected calculated reply. If they match, the SIM 15 and the associated mobile terminal are considered to be authenticated.

It should be understood that such an authentication process can be performed for any terminal provided with a SIM 15 under control of the mobile telecommunications network 3. In the embodiment the terminal communicates wirelessly with the mobile telecommunications network 3 via the network's radio access network, although this is not essential. For example, the terminal may communicate with the network via the fixed telephone network (PSTN) 23, via the fixed link 21.

The SIM 15 used by the terminal 1, 11, 13 may be a SIM of the type defined in the GSM or UMTS standards specifications, or may be a simulation of a SIM - that is, software or hardware that performs a function corresponding to that of the SIM. The SIM may be in accordance with the arrangement described in WO-A-2004 036513.

The MSC 9 is associated with a home location register (HLR) 25. The HLR 25 contains all the administrative information of each subscriber registered with the network 3. It also contains information concerning the current position of the subscriber terminals 1 and 11. When the terminals 1, 11 leave the area covered by the network 3, and enter, for example, an area covered by the network 3', administrative information is obtained from the visitor location register (VLR) 27 of the network 3'. The VLR 27 contains selected administrative information from the HLR 25, for each terminal located in the area controlled by the VLR 27.

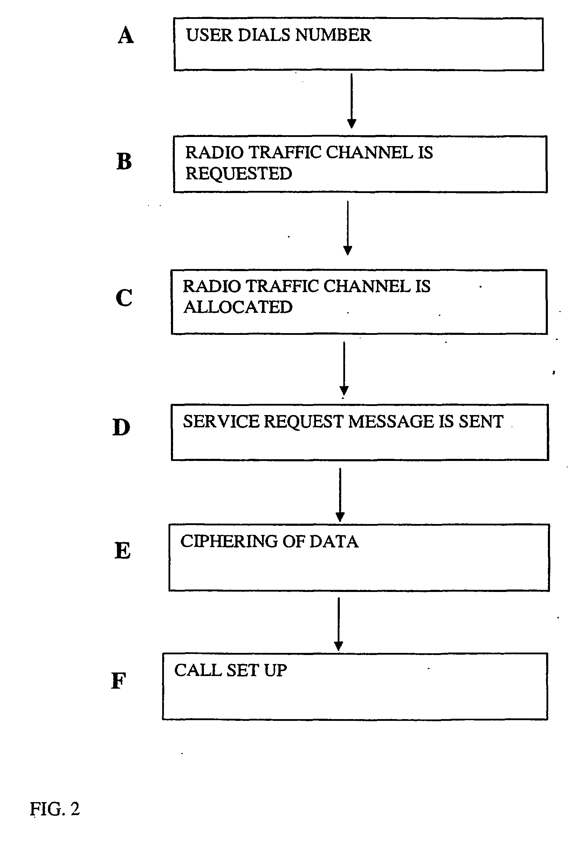

Figure 2 illustrates schematically the steps which are conventionally undertaken when the user 31 of terminal 1 makes a call to a terminal 29 connected to a PSTN 23. In step A, the user 31 dials the telephone number of terminal 29 into terminal 1. In response, control channel signalling between the terminal 1 and the BSS 6 transmits a traffic channel request message to BSS 6 (step B). This message is sent on a random access channel and instructs BSS 6 to allocate a radio resource channel for voice or data communication between the terminal 1 and MSC 9. The terminal 1 then waits for a radio resource assignment message, and listens to a dedicated radio channel called the access grant channel for a reply from BSS 6. Meanwhile, on receipt of the channel request message, BSS 6 allocates a traffic channel to the terminal 1. The BSS 6 transmits, on the access grant channel, a radio resource assignment message to the terminal 1 (step C). The radio resource assignment message indicates to the terminal 1 the traffic channel that has been allocated to it by the BSS 6. The traffic channel is a specified frequency, timeslot on that frequency or code for communication between the terminal 1 and the MSC 9, alone or in combination. The terminal 1 uses the traffic channel designated by the BSS 6 for subsequent voice and data communications with the MSC 9, via the BSS 6. Therefore at this stage, a specific radio channel is dedicated to communications between the terminal 1 and the BSS 6.

In step D, the terminal 1 sends a service request message over the designated traffic channel to BSS 6. The BSS 6 forwards this message to the MSC 9. The MSC 9 then authenticates the SIM 15 of terminal 1. This is done using the authentication process outlined above. Once the SIM 15 is authenticated, the MSC 9 initiates ciphering of the data sent on the dedicated traffic channel between the terminal 1 and the MSC 9 (step E). This prevents eavesdropping. The MSC 9 sends a message over the dedicated traffic channel to the terminal 1 to instruct the terminal 1 to enable ciphering mode. The terminal 1 sends a reply message to the MSC 9 to indicate that ciphering has been enabled. Any data which is subsequently sent between the terminal 1 and MSC 9 is then ciphered.

In step F, the terminal 1 sends a message to the MSC 9 to initiate call set up. In response, the MSC 9 allocates a voice circuit between the MSC 9 and the BSS 6, and informs the terminal 1 to switch from signalling to voice mode. The mobile acknowledges receipt of the message. The MSC 9 then sends the call to the called terminal 29 (in this case, via the PSTN 23). The PSTN 23 sends a message to the MSC 9 which indicates that the called terminal 29 is being contacted. The MSC 9 then forwards this information to the terminal 1, causing terminal 1 to alert the user 31 thereof that the called terminal is ringing. When the called terminal 29 is answered, the PSTN 23 sends a message to the MSC 9 to instruct it to connect the call. This message is forwarded to the terminal 1. The call is then connected by terminal 1. A speech path has then been set up between the terminal 1 and the terminal 29.

Thus far what has been described is how calls are conventionally set up in a telecommunications network.

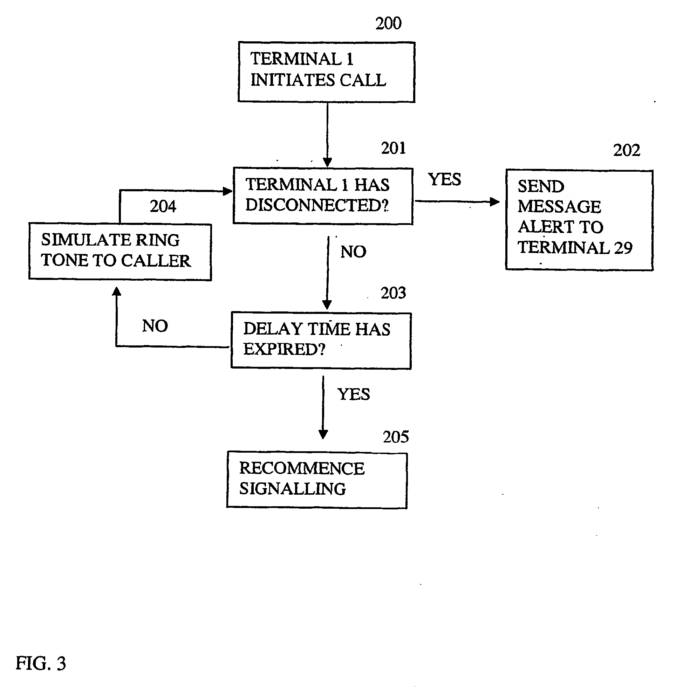

A first embodiment of the invention will now be described with reference to Figure 3. In step 200, a call from terminal 1 to terminal 29 is initiated starting with signalling step A as previously described in relation to Figure 2. However, in contrast to the Figure 2 arrangement, the control channel signalling between the terminal 1 and the BSS 6 does not immediately transmit a traffic channel request message to the BSS 6. Such traffic channel signalling (and steps B to F) are interrupted for a predetermined period of time (the delay time). During the delay time, in step 201, it is determined whether or not the control channel signalling from the terminal 1 continues to indicate that a call should be established. If the control channel signalling from the terminal 1 indicates that the call has been terminated a message (step 202) is sent to terminal 29, alerting the user of terminal 29 to initiate a call to terminal 1. However, the control channel signalling from terminal 1 continues to indicate that the call should be established and the predetermined delay time has not expired (step 203), the user of terminal 1 is given some indication (step 204) that terminal 29 is being contacted. If, when the delay time has expired, the control channel signalling from the terminal 1 continues to indicate that the call should be established, the traffic channel request signalling recommences at the point at which it was delayed (step 205) at step B of Figure 2. Steps C to F are then performed.

In the embodiment, terminal 1 delays initiating the call set up procedures described in steps B to F for a predetermined delay time. This is done using a software application 33 on terminal 1. During the delay time, the user 31 of terminal 1 is given an indication that the terminal 29 is being contacted - for example, by simulating a ring tone on terminal 1.

Advantageously, in this embodiment, the allocation of a dedicated voice circuit between terminal 1 and terminal 29 is not effected until after the predetermined delay time. Therefore if the user 31 of terminal 1 carries out a paging call to terminal 29, and disconnects within the predetermined delay time (e.g. after a couple of rings), the call set up procedures B to F are aborted and no dedicated voice circuit is established. This lowers the consumption of network resources used by such paging calls. Instead, a message, for example an SMS message or a simulated ring with Caller ID, is sent to the terminal 29 to alert the user of terminal 29 to initiate a call to terminal 1.

If the user 31 of terminal 1 does not disconnect the call after the predetermined delay time, the call establishment procedures B to F commences in the usual way as described with reference to Figure 2.

In the present embodiment, the predetermined delay time is a fixed time, in the region of 5 seconds, set by the network 3. However, it should be understood that the predetermined time may be longer or shorter than 5 seconds. Alternatively, the predetermined time may be determined by a parameter associated with the user 31 of the terminal 1 - for example, the predetermined time may be determined by the calling history of the user of the terminal 1.

In an alternative embodiment, the predetermined delay time is set by the terminal 1. On each completion of steps A to F, software 33 which is programmed onto the terminal 1 studies the call logs stored in the memory 35 of terminal 1. The software 33 determines from the call logs the frequency with which paging calls have been made by the user 31 of terminal 1. The software 33 then allocates a predetermined delay time to user at step 203, based on the frequency with which paging calls have been made by the user 31 of terminal 1. The predetermined delay time is longer in duration for users who frequently use paging calls than for other users. Indeed, for users who infrequently place paging calls, the predetermined delay time may be set to zero. Therefore, in this embodiment, call set up (procedures B to F) are delayed for a predetermined delay time, the delay time being set in accordance with the calling history of the terminal 1, by software programmed into terminal 1.

In an alternative embodiment, the predetermined delay time is determined by software programmed on to the HLR 25 of the network 3. In this embodiment, a call originating from terminal 1 is initiated in the usual way, in accordance with steps A to C as previously described in relation to figure 2. At step D, terminal 1 sends a service request message to the MSC 9, as has been previously described in relation to figure 2. On receipt of this service request message, software 37 programmed onto the HLR 25 studies the call logs stored in the HLR 25. The software 37 determines from the call logs the frequency with which paging calls have been made by the user 31 of terminal 1. The software 37 then allocates a predetermined delay time to the call. The predetermined delay time is based on the frequency with which paging calls have been made by the user 31 or terminal 1. The predetermined delay time is longer in duration for users who frequently use paging calls than for other users. Authentication of the SIM, and the following procedures described in processes D to F are then delayed until after the predetermined delay time.

In an alternative arrangement that is not an embodiment of the invention, the user 31 of terminal 1 is able to alert the user of terminal 29 to initiate a call to terminal 1 using a softkey, or a series of keys, located on terminal 1. In this embodiment, the steps A to F are not carried out to initiate call set up. Instead, the user 31 of terminal 1 presses the relevant keys on terminal 1. In response, terminal 1 sends a message to terminal 29 to alert the user of terminal 29 to initiate a call with terminal 1.

This message may be of the form of a flash SMS or a simulated ring with Caller ID to the terminal 29.

Although in the embodiments described, the callee 29 is connected by PSTN 23, the invention is also applicable to the situation where the callee is connected by a different network, such as a mobile or cellular network. The invention is also applicable to the situation where the callee 29 is a mobile subscriber to the network 3.

In further embodiments of the invention the delay is contained purely within the within the terminal rather than at the base station. In such embodiments the control channel signalling is delayed until the terminal has made a decision on the user's intention to make a call, rather than merely to page. A predetermined delay is provided between the user dialling the telephone number and initiating a call (step A of figure 2) and the control channel signalling to the base station (step B of figure 2).

In use, the user of terminal 1 dials the number for terminal 29 and indicates that he wants to make a call. The indication would typically be, for example, pressing the "call" button. At this stage, the terminal recognises that the user is proposing to make a call. However, the terminal has not yet made a decision on whether the user's intention to make a call and so takes no action to connect to the network at this time. Instead, the indication triggers a predetermined time frame (delay), for example 5 seconds, which is measured by the terminal. During this time period, the user may be given an indication that the destination terminal is being contacted, for example by simulating a ring tone on terminal 1, however, the terminal takes no action during this time period. During the time period, in contrast to the first embodiment, no traffic channel is established between the terminal 1 and the BSS 6.

If the user indicates that he wishes to disconnect the call before the expiry of the predetermined time frame (for example by pressing the "cancel" button), the terminal does not initiate the control channel signalling. Therefore, the network never received any indication that the terminal might be trying to make a call. Advantageously, in this embodiment, no network resources were allocated to the terminal during the period in which the terminal might have been wishing to make a call.

On occasions when the terminal terminates a call within the delay period, preferred embodiments of the invention recognise that the user had been wishing to page terminal 29 and send a message to terminal 29 to alert the user of terminal 29 to initiate a call to terminal 1. The message may be of the form of an SMS or in any other suitable format. This may be a predefined message format which could be determined by the terminal manufacturer or, potentially, written by the user. For example, "caller number" called you / paged you at "xx:xx", please return their call".

In yet further embodiments, the terminal may keep a record of the paging habits of the user and build a history of pages by the user. The terminal may also store details including the time at which the page was made and the number which the terminal was calling. This data may be transmitted to the network to enable the network to also keep a history of pages by the user.

In the case that the user does not indicate that he wishes to terminate the call during the delay period, on expiry of the delay period, the terminal initiates signalling with the network by initiating control channel signalling (step B of figure 2) and will then continue to set up a call in the usual way (i.e. steps C-F of figure 2).

In further embodiments of the invention the terminal may determine when to initiate a delay and how long to make that delay by using its history to determine intelligently which numbers are most likely to be paged, what time the user is most likely to be paged etc. Additionally, the user may be able to interact with the paging software in order to program the terminal to provide a delay at certain times or for certain numbers. In such embodiments, the terminal would check the number that the user is wishing to call and confirm the time, date etc before deciding whether to introduce a delay or not. Alternatively, the paging feature could be cancelled altogether by the user.

In other arrangements, which are not embodiments, the terminal may include a specific paging key. The user could press this key instead of the call set up key after dialling the number and the terminal would automatically send a message to the destination terminal rather than delaying and/or setting up a call.

## Claims

1. A method of selectively requesting that the user of a second device (29) initiates a call to the user of a first device (1), the method **characterised by**, in response to a request from the user of the first device (1) to call the second device (29), simulating to the user of the first device (1) until a predetermined time that the user of the second device (29) is being contacted, and sending, in response to the request from the user of the first device (1) to call the second device (29), an automatically generated message from the first device (1) to the second device (29) to alert the user of the second device (29) to initiate a call to the first device (1) only if the user of the first device (1) terminates the call request within the predetermined time.

2. The method of claim 1, wherein the request causes a control channel signalling to be transmitted between the first device (1) and a base station (6) of a cellular telecommunications network.

3. The method of claim 2, wherein the control channel signalling is transmitted before said predetermined time.

4. The method of claim 1, wherein no signalling between the first device (1) and the second device (29) occurs before the predetermined time.

5. The method of claim 4, wherein control channel signalling and traffic channel signalling is transmitted from the first device (1) only after the predetermined time.

6. A telecommunications control means (33,37) operable to selectively request that the user of a second device (29) initiates a call to the user of a first device (1), **characterised in that** the control means (33, 37) is operable, in response to a request from the user of the first device (1) to call the second device (29), to simulate to the user of the first device (1) until a predetermined time that the user of the second device (29) is being contacted, and is operable to send, in response to the request from the user of the first device (1) to call the second device (29), an automatically generated message from the first device (1) to the second device (29) to alert the user of the second device (29) to initiate a call to the first device (1) only if the user of the first device (1) terminates the call request within the predetermined time.

7. The telecommunications control means (33, 37) of claim 6, operable, in response to the request, to cause control channel signaling to be transmitted between the first device (1) and a base station (6) of a cellular telecommunications networks.

8. The telecommunications control means (33, 37) of claim 6, operable to cause the control channel signalling to be transmitted before said predetermined time.

9. The telecommunications control means (33, 37) of claim 6, operable to cause no signalling between the first device (1) and the second device (29) to occur before the predetermined time.

10. The telecommunications control means (33, 37) of claim 9, operable to cause control channel signalling and traffic channel signalling to be transmitted from the first device (1) only after the predetermined time.

11. The telecommunications control means (33, 37) of any one of claim 6 to 10, operable to cause one or more traffic channels to be dedicated to the connection only after the predetermined time has expired.

## Patentansprüche

1. Verfahren zum selektiven Auffordern eines Benutzers eines zweiten Gerätes (29), einen Anruf an den Benutzer eines ersten Gerätes (1) einzuleiten, wobei das Verfahren durch die folgenden Schritte gekennzeichnet ist: Simulieren, als Reaktion auf eine Aufforderung des Benutzers des ersten Gerätes (1), das zweite Gerät (29) anzurufen, dem Benutzer des ersten Gerätes (1) bis zu einer vorbestimmten Zeit, dass der Benutzer des zweiten Gerätes (29) kontaktiert wird, und Senden, als Reaktion auf die Aufforderung des Benutzers des ersten Gerätes (1), das zweite Gerät (29) anzurufen, einer automatisch erzeugten Nachricht vom ersten Gerät (1) zum zweiten Gerät (29), um den Benutzer des zweiten Gerätes (29) aufzufordern, einen Anruf an das erste Gerät (1) einzuleiten, nur dann, wenn der Benutzer des ersten Geräts (1) die Anrufaufforderung innerhalb der vorbestimmten Zeit beendet.

2. Verfahren nach Anspruch 1, wobei die Aufforderung bewirkt, dass eine Steuerkanalsignalisierung zwischen dem ersten Gerät (1) und einer Basisstation (6) eines zellulären Telekommunikationsnetzes übertragen wird.

3. Verfahren nach Anspruch 2, wobei die Steuerkanalsignalisierung vor der genannten vorbestimmten Zeit übertragen wird.

4. Verfahren nach Anspruch 1, wobei vor der vorbestimmten Zeit keine Signalisierung zwischen dem ersten Gerät (1) und dem zweiten Gerät (29) erfolgt.

5. Verfahren nach Anspruch 4, wobei Steuerkanalsignalisierung und Verkehrskanalsignalisierung vom ersten Gerät (1) erst nach der vorbestimmten Zeit übertragen werden.

6. Telekommunikationssteuermittel (33, 37) zum selektiven Auffordern eines Benutzers eines zweiten Geräts (29), einen Anruf an den Benutzer eines ersten Geräts (1) einzuleiten, **dadurch gekennzeichnet, dass** das Steuermittel (33, 37) die Aufgabe hat, als Reaktion auf eine Aufforderung des Benutzers des ersten Geräts (1), das zweite Gerät (29) anzurufen, dem Benutzer des ersten Gerätes (1) bis zum Ablauf einer vorbestimmten Zeit zu simulieren, dass der Benutzer des zweiten Gerätes (29) kontakiert wird, und die Aufgabe hat, als Reaktion auf die Aufforderung des Benutzers des ersten Geräts (1), das zweite Gerät (29) anzurufen, eine automatisch erzeugte Nachricht vom ersten Gerät (1) zum zweiten Gerät (29), um den Benutzer des zweiten Gerätes (29) darauf aufmerksam zu machen, einen Anruf an das erste Gerät (1) einzuleiten, nur dann zu senden, wenn der Benutzer des ersten Geräts (1) die Anrufaufforderung innerhalb der vorbestimmten Zeit beendet.

7. Telekommunikationssteuermittel (33, 37) nach Anspruch 6 mit der Aufgabe, als Reaktion auf die Aufforderung zu bewirken, dass eine Steuerkanalsignalisierung zwischen dem ersten Gerät (1) und einer Basisstation (6) eines zellulären Telekommunikationsnetzes übertragen wird.

8. Telekommunikationssteuermittel (33, 37) nach Anspruch 6 mit der Aufgabe zu bewirken, dass die Steuerkanalsignalisierung vor der genannten vorbestimmten Zeit übertragen wird.

9. Telekommunikationssteuermittel (33, 37) nach Anspruch 6 mit der Aufgabe zu bewirken, dass vor der vorbestimmten Zeit keine Signalisierung zwischen dem ersten Gerät (1) und dem zweiten Gerät (29) erfolgt.

10. Telekommunikationssteuermittel (33, 37) nach Anspruch 9 mit der Aufgabe zu bewirken, dass die Steuerkanalsignalisierung und die Verkehrskanalsignalisierung vom ersten Gerät (1) erst nach der vorbestimmten Zeit übertragen werden.

11. Telekommunikationssteuermittel (33, 37) nach einem der Ansprüche 6 bis 10 mit der Aufgabe zu bewirken, dass ein oder mehrere Verkehrskanäle erst nach Ablauf der vorbestimmten Zeit für die Verbindung dediziert werden.

## Revendications

1. Procédé destiné à demander de façon sélective que l'utilisateur d'un second dispositif (29) lance un appel à l'utilisateur d'un premier dispositif (1), le procédé étant **caractérisé par** les opérations consistant à : en réaction à une demande provenant de l'utilisateur du premier dispositif (1) d'appeler le second dispositif (29), opérer une simulation vers l'utilisateur du premier dispositif (1) jusqu'à une certaine durée prédéterminée que l'utilisateur du second dispositif (29) est en train d'être contacté, et en réaction à la demande provenant de l'utilisateur du premier dispositif (1) d'appeler le second dispositif (29), envoyer un message généré automatiquement à partir du premier dispositif (1) vers le second dispositif (29) afin d'alerter l'utilisateur du second dispositif (29) de lancer un appel au premier dispositif (1) uniquement si l'utilisateur du premier dispositif (1) met fin à la demande d'appel dans les limites de la durée prédéterminée.

2. Procédé selon la revendication 1, la demande provoquant la transmission d'une signalisation de canal de commande entre le premier dispositif (1) et une station de base (6) d'un réseau de télécommunications cellulaires.

3. Procédé selon la revendication, 2, la signalisation de canal de commande étant transmise avant ladite durée prédéterminée.

4. Procédé selon la revendication 1, aucune signalisation n'ayant lieu entre le premier dispositif (1) et le second dispositif (29) avant la durée prédéterminée.

5. Procédé selon la revendication 4, la signalisation de canal de commande et la signalisation de canal de trafic étant transmises à partir du premier dispositif (1) uniquement après la durée prédéterminée.

6. Moyens de commande de télécommunications (33, 37) exploitables pour demander de façon sélective que l'utilisateur d'un second dispositif (29) lance un appel à l'utilisateur d'un premier dispositif (1), **caractérisés en ce que** les moyens de commande (33, 37) sont exploitables, en réaction à une demande provenant de l'utilisateur du premier dispositif (1) d'appeler le second dispositif (29), pour opérer une simulation vers l'utilisateur du premier dispositif (1) jusqu'à une certaine durée prédéterminée que l'utilisateur du second dispositif (29) est en train d'être contacté, et sont exploitables, en réaction à la demande provenant de l'utilisateur du premier dispositif (1) d'appeler le second dispositif (29), pour envoyer un message généré automatiquement à partir du premier dispositif (1) vers le second dispositif (29) afin d'alerter l'utilisateur du second dispositif (29) de lancer un appel au premier dispositif (1) uniquement si l'utilisateur du premier dispositif (1) met fin à la demande d'appel dans les limites de la durée prédéterminée.

7. Moyens de commande de télécommunications (33, 37) selon la revendication 6, exploitables, en réaction à la demande, pour provoquer la transmission d'une signalisation de canal de commande entre le premier dispositif (1) et une station de base (6) d'un réseau de télécommunications cellulaires.

8. Moyens de commande de télécommunications (33, 37) selon la revendication 6, exploitables pour provoquer la transmission de la signalisation de canal de commande avant ladite durée prédéterminée.

9. Moyens de commande de télécommunications (33, 37) selon la revendication 6, exploitables pour qu'aucune signalisation n'ait lieu entre le premier dispositif (1) et le second dispositif (29) avant la durée prédéterminée.

10. Moyens de commande de télécommunications (33, 37) selon la revendication 9, exploitables pour provoquer la transmission de la signalisation de canal de commande et de la signalisation de canal de trafic à partir du premier dispositif (1) uniquement après la durée prédéterminée.

11. Moyens de commande de télécommunications (33, 37) selon l'une quelconque des revendications 6 à 10, exploitables pour provoquer l'attribution d'un ou de plusieurs canaux de trafic à la connexion uniquement après l'expiration de la durée prédéterminée.
